# EUROPÄISCHE PATENTSCHRIFT

(11) **EP 3 621 844 B1**
(45) Veröffentlichungstag und Bekanntmachung des Hinweises auf die Patenterteilung: **10.06.2026**
(21) Anmeldenummer: 18721686.6
(22) Anmeldetag: 11.04.2018
(51) Int. Cl.: B60L 1/02

(54) **VERFAHREN ZUR STEUERUNG EINES LÜFTERS EINES MOBILTEILS UND VORRICHTUNG ZUR DURCHFÜHRUNG EINES SOLCHEN VERFAHRENS**
METHOD FOR CONTROLLING A FAN OF A MOBILE PART, AND DEVICE FOR CARRYING OUT SUCH A METHOD
PROCÉDÉ POUR LA COMMANDE D'UN VENTILATEUR D'UNE PIÈCE MOBILE ET DISPOSITIF POUR L'EXÉCUTION D'UN TEL PROCÉDÉ

(30) Priorität: 11.05.2017 DE 102017004506
(43) Veröffentlichungstag der Anmeldung: 18.03.2020
(73) Patentinhaber: SEW-EURODRIVE GmbH & Co. KG, 76646 Bruchsal (DE)
(72) Erfinder: SCHMIDT, Josef, 76676 Graben-Neudorf (DE); ZÖLLER, Thomas, 76646 Bruchsal (DE); HAUCK, Matthias, 68723 Schwetzingen (DE)
(86) Internationale Anmeldenummer: PCT/EP2018/025112
(87) Internationale Veröffentlichungsnummer: WO 2018/206152

(56) Entgegenhaltungen:
- EP-B1- 0 814 327
- JP-A- 2016 115 607
- US-A- 5 305 613
- US-A1- 2010 019 729
- US-A1- 2010 089 547
- US-A1- 2017 080 821
- US-A1- 2017 101 026

## Beschreibung

Die Erfindung betrifft ein Verfahren zur Steuerung eines Lüfters eines Mobilteils und eine Vorrichtung zur Durchführung eines solchen Verfahrens.

Es ist allgemein bekannt, dass ein induktives Übertragen von Energie von einer Primärwicklung an eine Sekundärwicklung ausführbar ist.

Aus der DE 10 2015 112 077 B3 ist ein Kühlverfahren für einen Mehrachs-Kontroller bekannt.

Aus der DE 10 2010 011 768 A1 ist ein Elektroantriebssystem bekannt.

Aus der DE 103 48 133 A1 ist ein Verfahren zum Ansteuern eines Lüfters mit mehreren Kennlinien bekannt.

Aus der DE 35 03 943 A1 ist eine Steuereinrichtung für ein in einem Leistungsverstärker angeordnetes Lüftergebläse bekannt.

Aus der US 2009 / 0173471 A1 ist ein Kühlsystem für ein Heizelement bekannt.

**Aus der** US 2017/080821 A2 **ist als nächstliegender Stand der Technik ein Kühlsystem für eine Fahrzeugeinheit bekannt.**

**Aus der** US 5 305 613 A **ist eine Klimaanlage für ein Elektrofahrzeug bekannt.**

**Aus der** US 2017/101026 A1 **ist ein Verfahren zum Schätzen der Autonomie bei einem Elektrofahrzeug bekannt.**

**Aus der** US 2010/019729 A1 **ist eine Leistungsversorgung bei einem Elektrofahrzeug bekannt.**

**Aus der** US 2010/089547 A1 **ist ein Verfahren zur Temperatursteuerung eine Multi-Batteriesystems bekannt.**

Der Erfindung liegt daher die Aufgabe zugrunde, die Sicherheit bei einer Anlage mit verfahrbaren Mobilteilen zu verbessern.

Erfindungsgemäß wird die Aufgabe bei dem Verfahren nach den in Anspruch 1 und bei der Vorrichtung nach den in Anspruch 4 angegebenen Merkmalen gelöst.

Wichtige Merkmale der Erfindung bei dem Verfahren zur Steuerung eines Lüfters eines Mobilteils sind, dass mittels eines vom Lüfter förderbaren Luftstroms ein Speicher des Mobilteils kühlbar ist,

insbesondere wobei ein elektromotorischer Traktionsantrieb des Mobilteils aus dem Speicher versorgbar ist,
wobei Werte physikalischer Größen bestimmt werden und aus den Werten und unter Berücksichtigung einer vorgesehenen Soll-Bahnkurve, insbesondere eines vorgesehenen Soll-Geschwindigkeitsverlaufs, des Mobilteils Entscheidungswerte bestimmt werden,
wobei als jeweiliges Kriterium der jeweilige Entscheidungswert auf das Überschreiten eines dem jeweiligen Kriterium zugeordneten jeweiligen Schwellwertes oder Unterschreiten eines jeweiligen Schwellwertes oder auf unzulässig hohe Abweichung von einem jeweiligen Schwellwert überwacht wird,
wobei der Lüfter ausgeschaltet wird, wenn zumindest ein Kriterium nicht erfüllt ist,
wobei der Lüfter eingeschaltet wird, wenn alle Kriterien erfüllt sind.

Von Vorteil ist dabei, dass die Sicherheit in einfacher Weise erhöhbar ist, wobei aber auch ein sicherer Betrieb der Anlage gewährleistbar ist und der Energiebedarf für die Kühlung des Energiespeichers optimiert wird.

**Erfindungsgemäß** wird als erstes Kriterium überwacht, ob die Temperaturdifferenz zwischen der erfassten Temperatur des Speichers und der erfassten Temperatur der Umgebungsluft einen Schwellwert überschreitet. Von Vorteil ist dabei, dass eine zu hohe Temperatur des Speichers verhinderbar ist.

**Erfindungsgemäß** wird als zweites Kriterium überwacht, ob die vom Speicher und einer eventuellen Ladeeinrichtung bereit stellbare Leistung (P_verfügbar) abzüglich der Leistung des Lüfters (P_Lüfter) und abzüglich der sonstigen vom Mobilteil verbrauchten Leistung (P_Mobilteil) einen weiteren Schwellwert, insbesondere nämlich eine Reserveleistung (P_Reserve), überschreitet,
insbesondere so, dass sichergestellt ist, dass stets noch diese Reserveleistung (P_Reserve) zur Verfügung steht, insbesondere beispielsweise für unerwartete Beschleunigungen des elektromotorisch angetriebenen Traktionsantriebs des Mobilteils. Von Vorteil ist dabei, dass genügend Leistung für die Fahrbewegung des Mobilteils zur Verfügung steht, wenn der Lüfter betrieben wird. Dabei ist auch Reserveleistung für im Notfall durchzuführende Fahrmanöver berücksichtigbar.

Bei einer vorteilhaften Ausgestaltung wird als drittes Kriterium überwacht, ob eine Wertigkeit der im Speicher aktuell vorhandenen Energie einen Schwellwert, insbesondere beispielsweise Eins, unterschreitet und größer oder gleich Null ist,
insbesondere wobei stets aktuell für den bis zum nächsten induktiven Beladen des Mobilteils, insbesondere des Speichers des Mobilteils, vorgesehenen Fahrweg, insbesondere also für die Soll-Bewegung, der Energieverbrauch W_Prognose des Mobilteils prognostiziert wird,
insbesondere wobei der Verbrauch des Traktionsantriebs und der sonstigen elektrischen Verbraucher des Mobilteils, welche aus dem Speicher versorgt werden, berücksichtigt werden und wobei die aktuell im Speicher vorhandene Energiemenge (W_ist) berücksichtigt wird,
insbesondere wobei aus diesen beiden Größen eine Wertigkeit, insbesondere ein Wertfaktor K_W, bestimmt wird,
wobei die funktionale Abhängigkeit der Wertigkeit derart ist, dass
   - die Wertigkeit einen von Null verschiedenen Wert aus einem ersten Wertebereich hat, insbesondere gegen Unendlich tendiert, wenn die Differenz zwischen dem im Speicher vorhandenen Energiegehalt (W_ist) und dem für die Soll-Bewegung prognostizierten Energieaufwand (W_Prognose) einem ersten Energiewert entspricht, insbesondere einem ersten sehr kleinen Energiewert entspricht,
   - und dass sie einen von Null verschiedenen Wert aus einem zweiten Wertebereich hat, wenn die Differenz zwischen dem im Speicher vorhandenen Energiegehalt (W_ist) und dem für die Soll-Bewegung prognostizierten Energieaufwand (W_Prognose) einem zweiten Energiewert entspricht, insbesondere einem zweiten sehr großen Energiewert entspricht,
   - wobei der erste Energiewert kleiner ist als der zweite Energiewert,
   - wobei die Werte des zweiten Wertebereichs kleiner sind als die Werte des ersten Wertebereichs,
   - wobei die Wertigkeit negative Werte annimmt, wenn der prognostizierte Energiebedarf W_Prognose größer ist als der vorhandene Energiegehalt W_ist,
   - insbesondere wobei die Wertigkeit beim induktiven Laden auf Null gesetzt wird.

Von Vorteil ist dabei, dass bei nur wenig frei verfügbarer Energie die Wertigkeit sehr hoch ist und bei viel frei verfügbarer Energie die Wertigkeit niedrig ist. Insbesondere verschwindet beim Beladen die Wertigkeit sogar. Bei nicht ausreichendem Energiegehalt wird die Wertigkeit negativ. Auf diese Weise ist bei Unterschreiten eines Schwellwertes der Lüfter einschaltbar solange die Wertigkeit nicht negativ ist. Bei Überschreiten des Schwellwertes jedoch bleibt der Lüfter ausgeschaltet. Ein vorausschauendes Kühlen ist dann nicht ausführbar und die Temperatur des Speichers kann dann zunächst ansteigen. Sobald jedoch die Wertigkeit beispielsweise beim Laden absinkt oder zumindest nur noch wenig Energie bis zum Erreichen der Ladeposition benötigt wird. Bei relativ gesehen großer Ladeenergie des Speichers wird also ein Einschalten des Lüfters ermöglicht.

**Erfindungsgemäß** wird der zeitliche Verlauf der Temperatur des Speichers insbesondere für ein in die Zukunft gerichtetes Zeitintervall T_x prognostiziert,
wobei als viertes Kriterium überwacht wird, ob der Verlauf insbesondere innerhalb des in die Zukunft gerichteten Zeitintervalls T_x einen oberen Schwellwert überschreitet. Von Vorteil ist dabei, dass ein prädiktives Kühlen des Speichers ausführbar ist.

**Erfindungsgemäß** wird die aufgrund des Fahrauftrags zu erwartende Leistungsentnahme, also der zu erwartende Verlauf der aus dem Speicher entnommenen Leistung P(t), einem Temperaturmodell zugeführt, welches den Wärmeübergangswiderstand vom Speicher zur Umgebung und die Wärmekapazität des Speichers berücksichtigt. Von Vorteil ist dabei, dass eine einfache Modellbildung ermöglicht ist.

**Erfindungsgemäß** wird eine Verlustleistung als Produkt aus dem Innenwiderstand des Speichers und dem quadrierten Quotienten aus dem Betrag der Leistung P(t) und der Nennspannung des Speichers bestimmt,
wobei die Differenz aus Verlustleistung und einem Signal einem ersten Regelglied zugeführt wird, dessen Ausgangssignal die prognostizierte Temperatur darstellt und einem zweiten Regelglied zugeführt wird, dessen Ausgangssignal das Signal ist,
insbesondere wobei das erste Regelglied ein Integrierglied ist und das zweite Regelglied ein Proportionalglied ist,
insbesondere wobei der Proportionalitätsfaktor des ersten Regelgliedes der Kehrwert der Wärmekapazität des Speichers ist und der Proportionalitätsfaktor des zweiten Regelgliedes der Kehrwert des Wärmeübergangswiderstandes ist. Von Vorteil ist dabei, dass das Temperaturmodell einfach berechenbar ist und ausführbar ist.

**Erfindungsgemäß** ist der Wärmeübergangswiderstand abhängig vom Zustand des Lüfters,
insbesondere wobei bei eingeschaltetem Lüfter der gesamte, also effektive, Wärmeübergangswiderstand zur Umgebungsluft geringer als bei ausgeschaltetem Lüfter ist. Von Vorteil ist dabei, dass eine effektive Kühlung ermöglicht ist.

Bei einer vorteilhaften Ausgestaltung wird als fünftes Kriterium die gleiche Berechnung wie beim vierten Kriterium durchgeführt, allerdings mit dem bei nicht eingeschaltetem Lüfter vorhandenen Werts des Wärmeübergangswiderstands. Unterschreitet die so prognostizierte Speichertemperatur zum Zeitpunkt T_X eine untere Speichertemperatur nicht, so ist das Kriterium erfüllt und der Lüfter wird eingeschaltet. Von Vorteil dabei ist, dass der Lüfter frühzeitig ausgeschaltet wird, wenn alleine die passive Kühlung ausreicht zum Erreichen einer unteren Temperaturschwelle und somit eine Energieeinsparung erreicht wird.

Wichtige Merkmale bei der Vorrichtung zur Durchführung eines vorgenannten Verfahrens sind, dass der Speicher ein schnellladefähiger Speicher ist, also der Quotient aus der Ladekapazität des Speichers gemessen in Amperestunden und dem maximal zulässigen Ladestrom kleiner als eine Zehntel Stunde ist,
wobei der vom Lüfter förderbare Luftstrom zumindest teilweise entlang von Kühlrippen oder durch Lüftungskanäle des Speichers strömt,
wobei ein Mittel, insbesondere eine elektronische Schaltung, insbesondere Rechner, den Lüfter abhängig von Signalen von Sensoren zur Erfassung von Werten physikalischer Größen des Mobilteils steuert,
insbesondere wobei ein erster Sensor zur Erfassung der Temperatur des Speichers auf dem Mobilteil angeordnet ist,
insbesondere wobei ein zweiter Sensor zur Erfassung der Umgebungslufttemperatur auf dem Mobilteil angeordnet ist,
insbesondere wobei ein dritter Sensor zur Erfassung der am Speicher anliegenden Spannung auf dem Mobilteil angeordnet ist,
insbesondere wobei ein vierter Sensor zur Erfassung des dem Speicher zugeführten Stromes oder des vom Speicher gelieferten Stromes auf dem Mobilteil angeordnet ist,
wobei ein Mittel zur Prognose des für die vorgesehene Bewegung des Mobilteils notwendigen zeitlichen Verlaufs der Leistung und/oder des für die vorgesehene Bewegung des Mobilteils notwendigen gesamten Energiebedarfs auf dem Mobilteil angeordnet ist.

Von Vorteil ist dabei, dass eine Anlage mit als mobile Assistenzsysteme, AGV oder FTS ausgeführten Mobilteilen mit erhöhter Sicherheit und minimalem Energieverbrauch betreibbar ist, da die Kühlung bei zur Verfügung stehender Energie und erwarteter hoher Temperatur aktiv betreibbar ist und der Speicher sozusagen vorausschauend herunterkühlbar ist, so dass mittels der vorausschauenden Herunterkühlung und mittels seiner Wärmekapazität die zu erwartende Spitzentemperatur reduzierbar ist und das Schnellladen über möglichst kurze Zeit durchführbar ist.

Bei einer vorteilhaften Ausgestaltung ist das Mobilteil auf einer Verfahrfläche einer Anlage bewegbar. Von Vorteil ist dabei, dass das Mobilteil als autonom verfahrbares Fahrzeug, wie mobile Assistenzsysteme, AGV oder FTS, betreibbar ist.

Bei einer vorteilhaften Ausgestaltung ist der Speicher ein Hybridspeicher, also eine Paarung aus einem auf Kohlenstoff basierenden Doppelschichtkondensator mit einer wiederaufladbaren Batterie auf Basis Nickelmetallhydrid. Von Vorteil ist dabei, dass ein sehr schnelles Aufladen erreichbar ist.

Bei einer vorteilhaften Ausgestaltung weist das Mobilteil an seiner Unterseite eine Sekundärwicklung auf, welche induktiv mit einer an der Verfahrfläche angeordneten Primärwicklung koppelbar ist, so dass Energie von der Primärwicklung an die Sekundärwicklung übertragbar ist,
insbesondere wobei von einer elektronischen Schaltung, insbesondere Einspeisegerät, ein Wechselstrom in die Primärwicklung eingeprägt wird,
wobei der Sekundärwicklung eine Kapazität derart in Reihe oder parallel zugeschaltet ist, dass die Resonanzfrequenz des so ausgebildeten Schwingkreises der Frequenz des in die Primärwicklung eingeprägten Wechselstroms entspricht. Von Vorteil ist dabei, dass ein berührungsloses Zuführen von Energie ermöglicht ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

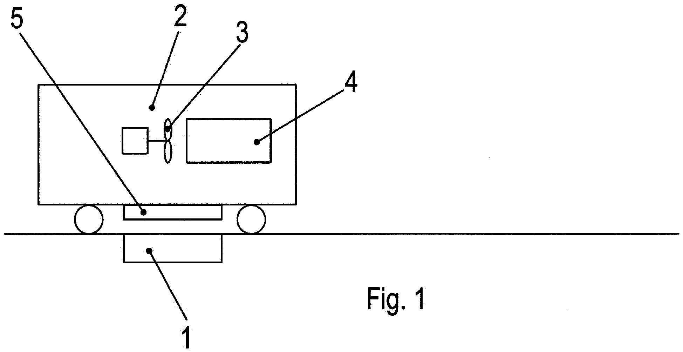

In der Figur 1 ist das induktive Laden eines auf der Verfahrfläche, insbesondere Boden, einer Anlage bewegbaren Mobilteils 2 dargestellt.

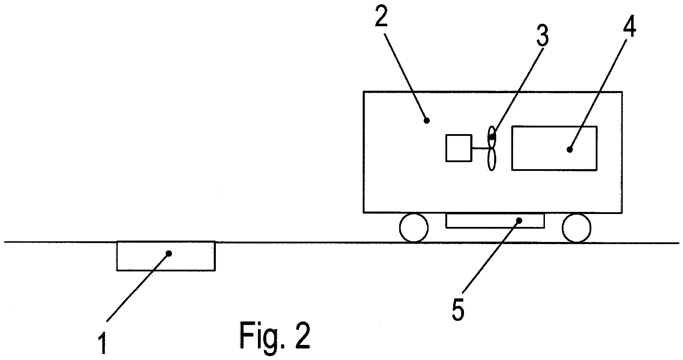

In der Figur 2 ist das Mobilteil 2 beabstandet von der bei Figur 1 gezeigten Position optimaler induktiver Kopplung.

Wie in den Figuren gezeigt, weist eine Anlage eine Verfahrfläche auf, auf der ein Mobilteil 2 bewegbar ist. An seiner Unterseite weist das Mobilteil 2 eine Sekundärwicklung 5 auf. An der Verfahrfläche ist eine Primärwicklung 1 angeordnet.

Sobald das Mobilteil 2 eine Position optimaler induktiver Kopplung zwischen Primärwicklung 1 und Sekundärwicklung 5 erreicht hat, wird Energie induktiv übertragen und ein Speicher 4 des Mobilteils 2 wird aufgeladen.

Da der Speicher vorzugsweise schnellladefähig ist, insbesondere also der Quotient aus der Ladekapazität des Speichers gemessen in Amperestunden und dem maximal zulässigen Ladestrom kleiner als 0,1 Stunden ist, entsteht beim Aufladen mehr Wärme als beim Entladen. Auch beim Entladen kann abhängig vom Entladestrom eine erhebliche Wärmemenge entstehen.

Ein Lüfter 3 fördert einen Kühlluftstrom, welcher den Speicher 4 kühlt.

Der Speicher 4 ist vorzugsweise ein Hybridspeicher, also eine Paarung aus einem auf Kohlenstoff basierenden Doppelschichtkondensator mit einer wiederaufladbaren Batterie auf Basis Nickelmetallhydrid, kann aber auch ein Batterie-, Akku- und/oder Ultracap-Speicher sein.

Erfindungsgemäß wird nun ein Verfahren zum Kühlen des Speichers 4 vorgeschlagen, welches nicht ausschließlich abhängig von einer erfassten Temperatur des Speichers 4 abhängt, sondern weitere Kriterien berücksichtigt.

Auf diese Weise ist auch ein prognostizierter Temperaturverlauf berücksichtigbar, der von dem Fahrauftrag des Mobilteils abhängt. Denn das Mobilteil 2 legt Fahrstrecken auf der Verfahrfläche zurück und transportiert dabei beispielsweise ein Objekt.

Die Fahrstrecken verlaufen zumindest teilweise, ohne dass eine induktive Versorgung des Mobilteils 2 ausgeführt wird. Somit wird dann der elektromotorisch ausgeführte Traktionsantrieb aus dem Speicher versorgt.

Am Speicher ist ein Temperatursensor zur Erfassung der Temperatur des Speichers angeordnet. Ein weiterer Temperatursensor zur Erfassung der Temperatur der Umgebungsluft ist am Mobilteil 2 angeordnet.

Erfindungsgemäß wird der Lüfter eingeschaltet, wenn vorzugsweise alle fünf nachfolgend beschriebenen Kriterien erfüllt sind.

Als erstes Kriterium wird überprüft, ob die Temperaturdifferenz zwischen der erfassten Temperatur des Speichers und der erfassten Temperatur der Umgebungsluft einen Schwellwert überschreitet. Das erste Kriterium wird also durch Überschreiten des Schwellwertes erfüllt.

Das zweite Kriterium bezieht sich auf die Verfügbarkeit der vom Speicher 4 und einer eventuell vorhandenen Ladeeinrichtung bereit stellbaren Leistung P_verfügbar. Hierbei wird überprüft ob die vom Speicher 4 bereit stellbare Leistung P_verfügbar abzüglich der Leistung des Lüfters P_Lüfter und abzüglich der sonstigen vom Mobilteil 2 verbrauchten Leistung P_Mobilteil einen weiteren Schwellwert, insbesondere nämlich eine Reserveleistung P_Reserve, überschreitet. Somit ist sichergestellt, dass stets noch diese Reserveleistung P_Reserve zur Verfügung steht, beispielsweise für unerwartete Beschleunigungen des elektromotorisch angetriebenen Traktionsantriebs.

Das dritte Kriterium bezieht sich auf einen der Energie zugeordneten Wert. Zunächst wird stets aktuell für den bis zum nächsten induktiven Laden vorgesehenen Fahrweg der Energieverbrauch W_Prognose des Mobilteils prognostiziert. Hierbei wird der Verbrauch des Traktionsantriebs und der sonstigen elektrischen Verbraucher des Mobilteils, welche aus dem Speicher 4 zu versorgen sind, berücksichtigt. Außerdem wird die aktuell im Speicher 4 vorhandene Energiemenge W_ist berücksichtigt. Aus diesen beiden Größen wird ein Wertfaktor K_W bestimmt. Dabei ist die funktionale Abhängigkeit des Wertfaktors derart, dass bei großer vorhandener Energiemenge W_ist und kleinem Verbrauch W_Prognose der Wertfaktor sehr klein ist, insbesondere gegen Null tendiert oder er ist zumindest sehr viel kleiner als ein Schwellwert, beispielsweise Eins. Ist jedoch nur eine geringere Energiemenge W_ist vorhanden und ein größerer prognostizierter Energieaufwand W_Prognose vorhersehbar, tendiert der Wertfaktor K_W gegen den Schwellwert oder überschreitet diesen. Wenn insbesondere der prognostizierte Energieaufwand W_Prognose sich ungefähr dem im Speicher 4 vorhandenen Energiegehalt W_ist nähert, ist die Wertigkeit sehr hoch, insbesondere tendiert sie gegen unendlich oder ist zumindest sehr viel größer als der Schwellwert. Ist der prognostizierte Energieaufwand W_Prognose größer als der im Speicher vorhandene Energieinhalt, so wird die Wertigkeit negativ und es wird erwartet, dass das Mobilteil die geplante nächste Ladeposition nicht erreichen kann.

Beim induktiven Laden wird die Wertigkeit K_W auf Null gesetzt.

Das dritte Kriterium ist also erfüllt, wenn die Wertigkeit den Schwellwert, beispielsweise Eins, unterschreitet und größer oder gleich Null ist.

Das vierte Kriterium betrifft die prognostizierte oder prädizierte Temperatur des Speichers 4. Dabei wird ausgehend von der aktuellen Temperatur des Speichers 4 die Temperatur des Speichers 4 insbesondere bis zu einem in der Zukunft liegenden Zeitpunkt T_x prognostiziert, indem die aufgrund des Fahrauftrags zu erwartende Leistungsentnahme, also der zu erwartende Verlauf der Leistung P(t) insbesondere bis zum Zeitpunkt T_x, einem Temperaturmodell zugeführt wird, welches den Wärmeübergangswiderstand vom Speicher 4 zur Umgebung und die Wärmekapazität des Speichers 4 berücksichtigt. Dabei ist der Wärmeübergangswiderstand abhängig vom Zustand des Lüfters 3 berücksichtigt. Denn bei eingeschaltetem Lüfter 3 ist der gesamte, also effektive, Wärmewiderstandübergangswiderstand zur Umgebungsluft geringer als bei ausgeschaltetem Lüfter 3.

Dabei ist zu beachten, dass die zu erwartende Leistung P(t) bei generatorischem Betrieb des Traktionsantriebs, beispielsweise bei einer bergab gerichteten Fahrt, negativ gezählt wird, da der Speicher 4 dann aufgeladen wird. Bei motorischem Betrieb hingegen wird die zu erwartende Leistung P(t) positiv gezählt, da dem Speicher 4 dann Leistung entnommen wird.

Für die Modellbildung wird beispielhaft angenommen, dass die Verlustleistung dem Produkt aus dem Innenwiderstand des Speichers 4 und dem quadrierten Quotienten aus dem Betrag der Leistung P(t) und der Nennspannung des Speichers 4 entspricht. Die Differenz aus Verlustleistung und einem Signal wird einem ersten Regelglied zugeführt, dessen Ausgangssignal die Temperatur darstellt und einem zweiten Regelglied zugeführt wird, dessen Ausgangssignal das Signal ist. Das erste Regelglied ist vorzugsweise ein Integrierglied und das zweite Regelglied ist vorzugsweise ein Proportionalglied. Der Proportionalitätsfaktor des ersten Regelgliedes ist der Kehrwert der Wärmekapazität des Speichers 4. Der Proportionalitätsfaktor des zweiten Regelgliedes ist der Kehrwert des Wärmeübergangswiderstandes.

Mittels der Prognose des Leistungsverbrauchs und der davon abhängigen Prognose des Temperaturverlaufs insbesondere für ein in die Zukunft gerichtetes Zeitintervall T_x ist ein vorausschauendes Betreiben des Lüfters ermöglicht.

Das fünfte Kriterium betrifft ebenfalls die prognostizierte Temperatur des Speichers 4. Es wird die gleiche Berechnung wie beim vierten Kriterium durchgeführt, allerdings mit dem bei nicht eingeschaltetem Lüfter vorhandenen Wert des Wärmeübergangswiderstands. Unterschreitet die so prognostizierte Speichertemperatur zum Zeitpunkt T_x eine untere Speichertemperatur nicht, so ist das Kriterium erfüllt und es wird der Lüfter eingeschaltet. Von Vorteil dabei ist, dass der Lüfter nur eingeschaltet wird bzw. eingeschaltet bleibt, wenn alleine die passive Kühlung nicht ausreicht und somit keine Energieeinsparung erreicht werden kann.

Das erste Kriterium prüft grob gesprochen, ob ein Potential der aktiven Kühlung überhaupt vorhanden ist und ein Mindestpotential überschreitet.

Das zweite Kriterium prüft, ob die Leistung für die aktive Kühlung überhaupt zur Verfügung steht.

Das dritte Kriterium prüft grob gesprochen, ob sozusagen die zur Verfügung stehende Energie nicht zu kostbar ist, also das Risiko nicht zu hoch ist, dass keine Energie mehr für ungeplante Fahrmanöver zur Verfügung steht und das Mobilteil seine geplante Ladeposition nicht erreichen kann.

Das vierte Kriterium prüft, ob die zukünftig zu erwartende Temperatur einen oberen Schwellwert überschreiten wird.

Das fünfte Kriterium prüft, ob die zukünftig zu erwartende Temperatur auch ohne Lüfter einen unteren Schwellwert nicht unterschreitet. Unterschreitet die zukünftig zu erwartende Temperatur auch ohne Lüfter einen unteren Schwellwert kann auf ein Einschalten des Lüfters verzichtet werden, bzw der Lüfter kann frühzeitig abgeschaltet werden.

Durch Erfüllen der fünf Kriterien wird ein Einschalten des Lüfters 3 bewirkt. Wenn aber nur eines der Kriterien nicht erfüllt ist, bleibt der Lüfter 3 ausgeschaltet.

### Bezugszeichenliste

1 Primärwicklung
2 Mobilteil
3 Lüfter
4 Speicher
5 Sekundärwicklung

## Patentansprüche

1. Verfahren zur Steuerung eines Lüfters (3) eines Mobilteils (2),
wobei mittels eines vom Lüfter (3) förderbaren Luftstroms ein Speicher (4), des Mobilteils (2) kühlbar ist,
**wobei das Mobilteil als autonom verfahrbares Fahrzeug betrieben wird,**
wobei ein elektromotorischer Traktionsantrieb des Mobilteils (2) aus dem Speicher (4) versorgbar ist,
**wobei** Werte physikalischer Größen bestimmt werden und aus den Werten und unter Berücksichtigung eines vorgesehenen Soll-Geschwindigkeitsverlaufs des Mobilteils (2) Entscheidungswerte bestimmt werden,
wobei als jeweiliges Kriterium der jeweilige Entscheidungswert
auf unzulässig hohe Abweichung von einem jeweiligen Schwellwert überwacht wird,
wobei der Lüfter (3) ausgeschaltet wird, wenn zumindest ein Kriterium nicht erfüllt ist, wobei der Lüfter (3) eingeschaltet wird, wenn alle Kriterien erfüllt sind,
**dadurch gekennzeichnet, dass**
**als erstes Kriterium überwacht wird, ob die Temperaturdifferenz zwischen der erfassten Temperatur des Speichers (4) und der erfassten Temperatur der Umgebungsluft einen Schwellwert überschreitet,**
**wobei als zweites Kriterium überwacht wird, ob die vom Speicher (4) und einer eventuell vorhandenen Ladeeinrichtung bereit stellbare Leistung (P_verfügbar) abzüglich der Leistung des Lüfters (P_Lüfter) und abzüglich der sonstigen vom Mobilteil (2) verbrauchten Leistung (P_Mobilteil) einen weiteren Schwellwert,**
**nämlich eine Reserveleistung (P_Reserve), überschreitet, so, dass sichergestellt ist, dass stets noch diese Reserveleistung (P_Reserve) zur Verfügung steht,**
**wobei der zeitliche Verlauf der Temperatur des Speichers (4) für ein in die Zukunft gerichtetes Zeitintervall T_x prognostiziert wird,**
**wobei als viertes Kriterium überwacht wird, ob der prognostizierte Verlauf einen oberen Schwellwert** überschreitet,
**wobei die aufgrund des Fahrauftrags zu erwartende Leistungsentnahme, also der zu erwartende Verlauf der aus dem Speicher (4) entnommenen Leistung P(t), einem Temperaturmodell zugeführt wird, welches den Wärmeübergangswiderstand vom Speicher (4) zur Umgebung und die Wärmekapazität des Speichers (4) berücksichtigt,**
**wobei der Wärmeübergangswiderstand abhängig vom Zustand des Lüfters (3) ist,**
**wobei bei eingeschaltetem Lüfter (3) der gesamte, also effektive, Wärmewiderstandübergangswiderstand zur Umgebungsluft geringer als bei ausgeschaltetem Lüfter (3) ist,**
**wobei zur Bestimmung der prognostizierten Temperatur gemäß dem Temperaturmodell**
**eine Verlustleistung als Produkt aus dem Innenwiderstand des Speichers (4) und dem quadrierten Quotienten aus dem Betrag der Leistung P(t) und der Nennspannung des Speichers (4) bestimmt wird,**
**wobei die Differenz aus Verlustleistung und einem Signal einem ersten Regelglied zugeführt wird, dessen Ausgangssignal die prognostizierte Temperatur darstellt und einem zweiten Regelglied zugeführt wird, dessen Ausgangssignal das Signal ist,**
**wobei das erste Regelglied ein Integrierglied ist und das zweite Regelglied ein Proportionalglied ist,**
**wobei der Proportionalitätsfaktor des ersten Regelgliedes der Kehrwert der Wärmekapazität des Speichers (4) ist und der Proportionalitätsfaktor des zweiten Regelgliedes der Kehrwert des Wärmeübergangswiderstandes ist.**

2. Verfahren nach Anspruch 1,
**dadurch gekennzeichnet, dass**
als drittes Kriterium überwacht wird, ob eine Wertigkeit der im Speicher (4) aktuell vorhandenen Energie einen Schwellwert unterschreitet und größer oder gleich Null ist,
wobei stets aktuell für den bis zum nächsten induktiven Laden des Speichers (4) des Mobilteils (2) vorgesehenen Fahrweg, also für die Soll-Bewegung, der Energieverbrauch W_Prognose des Mobilteils (2) prognostiziert wird,
wobei die Verbrauchsleistung, des Traktionsantriebs und der sonstigen elektrischen Verbraucher des Mobilteils (2), welche aus dem Speicher (4) versorgt werden, berücksichtigt werden und wobei die aktuell im Speicher (4) vorhandene Energiemenge (W_ist) berücksichtigt wird,
wobei aus diesen beiden Größen eine Wertigkeit, **nämlich** ein Wertfaktor K_W, bestimmt wird,
wobei die funktionale Abhängigkeit der Wertigkeit derart ist, dass
- die Wertigkeit einen von Null verschiedenen Wert aus einem ersten Wertebereich hat, wenn die Differenz zwischen dem im Speicher (4) vorhandenen Energiegehalt (W_ist) und dem für die Soll-Bewegung prognostizierten Energieaufwand (W_Prognose) einem ersten Energiewert entspricht,
- und dass sie einen von Null verschiedenen Wert aus einem zweiten Wertebereich hat, wenn die Differenz zwischen dem im Speicher (4) vorhandenen Energiegehalt (W _ist) und dem für die Soll-Bewegung prognostizierten Energieaufwand (W_Prognose) einem zweiten Energiewert entspricht,
- wobei der erste Energiewert kleiner ist als der zweite Energiewert,
- wobei die Werte des zweiten Wertebereichs kleiner sind als die Werte des ersten Wertebereichs,
- wobei die Wertigkeit negative Werte annimmt, wenn der prognostizierte Energiebedarf W_Prognose größer ist als der vorhandene Energiegehalt W_ist,
- wobei die Wertigkeit beim induktiven Beladen auf Null gesetzt wird.

3. Verfahren nach mindestens einem der vorangegangenen Ansprüche,
**dadurch gekennzeichnet, dass**
der zeitliche Verlauf der Temperatur des Speichers (4) für ein in die Zukunft gerichtetes Zeitintervall T_x unter der Annahme eines nicht eingeschalteten Lüfters (3) prognostiziert wird,
wobei als fünftes Kriterium überwacht wird, ob der prognostizierte Verlauf einen unteren Schwellwert zum Zeitpunkt T_x nicht unterschreitet.

4. Vorrichtung zur Durchführung eines Verfahrens nach mindestens einem der vorangegangenen Ansprüche,
**dadurch gekennzeichnet, dass**
der Speicher (4) schnellladefähiger Speicher (4) ist, also der Quotient aus der Ladekapazität des Speichers (4) gemessen in Amperestunden und dem maximal zulässigen Ladestrom kleiner als eine zehntel Stunde ist,
wobei der vom Lüfter (3) förderbare Luftstrom zumindest teilweise entlang von Lüftungskanälen und/oder Kühlrippen des Speichers (4) strömt,
wobei ein Mittel, **nämlich** eine elektronische Schaltung, den Lüfter (3) abhängig von Signalen von Sensoren zur Erfassung von Werten physikalischer Größen des Mobilteils (2) steuert,
wobei ein Mittel, **nämlich** ein Rechner, zur Prognose des für die vorgesehene Bewegung des Mobilteils (2), entlang der Sollbahnkurve, notwendigen zeitlichen Verlaufs der Leistung und/oder des für die vorgesehene Bewegung des Mobilteils (2) notwendigen gesamten Energiebedarfs auf dem Mobilteil (2) angeordnet ist,
**wobei das Mobilteil (2) auf einer Verfahrfläche einer Anlage bewegbar ist**
**wobei der Speicher (4) ein Hybridspeicher ist, also eine Paarung aus einem auf Kohlenstoff basierenden Doppelschichtkondensator mit einer wiederaufladbaren Batterie auf Basis Nickelmetallhydrid,**
**wobei das Mobilteil (2) an seiner Unterseite eine Sekundärwicklung aufweist, welche induktiv mit einer an der Verfahrfläche angeordneten Primärwicklung (1) koppelbar ist, so dass Energie von der Primärwicklung (1) an die Sekundärwicklung übertragbar ist,**
**wobei von einer elektronischen Schaltung, ein Wechselstrom in die Primärwicklung (1) eingeprägt wird,**
**wobei der Sekundärwicklung eine Kapazität derart in Reihe oder parallel zugeschaltet ist, dass die Resonanzfrequenz des so ausgebildeten Schwingkreises der Frequenz des in die Primärwicklung (1) eingeprägten Wechselstroms entspricht,**
**wobei der Wärmeübergangswiderstand vom Speicher (4) zur Umgebung abhängig vom Zustand des Lüfters (3) ist,**
**wobei bei eingeschaltetem Lüfter (3) der gesamte, also effektive, Wärmewiderstandübergangswiderstand zur Umgebungsluft geringer als bei ausgeschaltetem Lüfter (3) ist.**

## Claims

1. A method for controlling a fan (3) of a mobile part (2),
wherein a storage means (4) of the mobile part (2) can be cooled by means of an air stream which can be delivered by the fan (3),
wherein the mobile part is operated as an autonomously driven vehicle,
wherein an electrically driven traction drive of the mobile part (2) can be supplied from the storage means (4),
wherein values of physical variables are determined, and decision values are determined from the values and taking into account an intended setpoint speed profile of the mobile part (2),
wherein, as a respective criterion, the respective decision value is monitored for impermissibly large deviation from a respective threshold value,
wherein the fan (3) is switched off if at least one criterion is not met,
wherein the fan (3) is switched on if all the criteria are met,
**characterised in that**
as a first criterion, it is monitored whether the temperature difference between the detected temperature of the storage means (4) and the detected temperature of the ambient air exceeds a threshold value,
with, as a second criterion, it being monitored whether the power (P_available) which can be provided by the storage means (4) and any charging means which may be present, minus the power (P_fan) of the fan and minus the other power (P_mobile) consumed by the mobile part (2) exceeds a further threshold value, namely a reserve power (P_reserve),
such that it is ensured that this reserve power (P_reserve) is always still available,
with the time profile of the temperature of the storage means (4) being predicted for a time interval T_x directed into the future,
with, as a fourth criterion, it being monitored whether the predicted profile exceeds an upper threshold value,
with the power draw to be expected on the basis of the driving command, i.e. the profile of the power P(t) drawn from the storage means (4) which is to be expected, being supplied to a temperature model which takes into account the heat transfer resistance from the storage means (4) to the surroundings, and the heat capacity of the storage means (4),
with the heat transfer resistance being dependent on the status of the fan (3),
with, when the fan (3) is switched on, the entire, i.e. effective, heat resistance transfer resistance in relation to the ambient air being lower than when the fan (3) is switched off,
with, to determine the predicted temperature, in accordance with the temperature model a power loss being determined as a product of the internal resistance of the storage means (4) and the squared quotient of the amount of the power P(t) and of the rated voltage of the storage means (4),
with the difference between the power loss and a signal being supplied to a first controlling element, the output signal of which represents the predicted temperature, and being supplied to a second controlling element, the output signal of which is the signal,
with the first controlling element being an integrating element and the second controlling element being a proportional element,
with the proportionality factor of the first controlling element being the reciprocal of the heat capacity of the storage means (4), and the proportionality factor of the second controlling element being the reciprocal of the heat transfer resistance.

2. A method according to claim 1,
**characterised in that**
as a third criterion, it is monitored whether a weighting factor of the energy currently present in the storage means (4) falls below a threshold value and is greater than or equal to zero,
with the energy consumption, W_predicted, of the mobile part (2) always currently being predicted for the driving path intended until the next inductive charging operation of the storage means (4) of the mobile part (2), i.e. for the setpoint movement,
with the consumed power of the traction drive and of the other electrical consumers of the mobile part (2) which are supplied from the storage means (4) being taken into account, and with the amount of energy (W_actual) currently present in the storage means (4) being taken into account,
with a weighting factor, namely a value factor K_W, being determined from these two variables,
with the functional dependency of the weighting factor being such that
- the weighting factor has a value from a first range of values which is other than zero if the difference between the energy content (W_actual) present in the storage means (4) and the energy expenditure (W_predicted) predicted for the setpoint movement corresponds to a first energy value,
- and that it has a value from a second range of values which is other than zero if the difference between the energy content (W_actual) present in the storage means (4) and the energy expenditure (W_predicted) predicted for the setpoint movement corresponds to a second energy value,
- with the first energy value being smaller than the second energy value,
- with the values of the second range of values being smaller than the values of the first range of values,
- with the weighting factor assuming negative values if the predicted energy requirement, W_predicted, is greater than the present energy content, W_actual,
- with the weighting factor upon the inductive charging being set to zero.

3. A method according to at least one of the preceding claims,
**characterised in that**
the time profile of the temperature of the storage means (4) for a time interval T_x directed into the future is predicted on the assumption of a fan (3) not being switched on,
with, as a fifth criterion, it being monitored whether the predicted profile does not fall below a lower threshold value at the time T_x.

4. A device for carrying out a method according to at least one of the preceding claims,
**characterised in that**
the storage means (4) is a storage means (4) capable of rapid charging, i.e. the quotient of the charging capacity of the storage means (4) measured in ampere-hours and the maximum permissible charging current is less than one tenth of an hour,
with the air stream which can be delivered by the fan (3) flowing at least partially along ventilation ducts and/or cooling fins of the storage means (4),
with a means, namely an electronic circuit, controlling the fan (3) dependent on signals of sensors for detecting values of physical variables of the mobile part (2),
with a means, namely a computer, for predicting the time characteristic of the power necessary for the intended movement of the mobile part (2) along the setpoint trajectory and/or for predicting the total energy requirement necessary for the intended movement of the mobile part (2) being arranged on the mobile part (2),
with the mobile part (2) being movable on a driving surface of an installation,
with the storage means (4) being a hybrid storage means, i.e. a pairing of a carbon-based double-layer capacitor with a rechargeable battery on the basis of nickel metal hydride,
with the mobile part (2) having on its und erside a secondary winding which can be coupled inductively with a primary winding (1) arranged on the driving surface, so that energy can be transmitted from the primary winding (1) to the secondary winding,
with an alternating current being injected into the primary winding (1) by an electronic circuit,
with a capacitor being connected in series or in parallel with the secondary winding in such a way that the resonant frequency of the oscillating circuit thus formed corresponds to the frequency of the alternating current injected into the primary winding (1),
with the heat transfer resistance from the storage means (4) to the surroundings being dependent on the status of the fan (3),
with, when the fan (3) is switched on, the entire, i.e. effective, heat resistance transfer resistance in relation to the ambient air being lower than when the fan (3) is switched off.

## Revendications

1. Procédé de commande d'un ventilateur (3) d'une unité mobile (2),
un accumulateur (4) de l'unité mobile (2) pouvant être refroidi au moyen d'un flux d'air pouvant être débité par le ventilateur (3),
l'unité mobile fonctionnant comme un véhicule à conduite autonome,
un entraînement par traction à motorisation électrique de l'unité mobile (2) pouvant être alimenté à partir de l'accumulateur (4),
des valeurs de grandeurs physiques étant déterminées, et des valeurs de décision étant déterminées à partir des valeurs et en tenant compte d'une courbe de vitesse théorique, de l'unité mobile (2), la valeur de décision respective étant surveillée, en tant critère respectif, pour un écart inadmissible par rapport une valeur de seuil respective,
le ventilateur (3) étant éteint lorsqu'au moins un critère n'est pas satisfait,
le ventilateur (3) étant allumé lorsque tous les critères sont satisfaits,
**caractérisé en ce que**
le premier critère est de savoir si la différence de température entre la température détectée de l'accumulateur (4) et la température détectée de l'air ambiant dépasse une valeur de seuil,
le deuxième critère étant de vérifier si la puissance (P_verfügbar) pouvant être fournie par l'accumulateur (4) et un dispositif de charge éventuellement disponible, moins la puissance du ventilateur (P_Lüfter) et moins la puissance consommée par l'unité mobile avant (2) (P_Mobilteil), dépasse une autre valeur de seuil, à savoir une puissance de réserve (P_Reserve), de manière à garantir que cette puissance de réserve (P_Reserve) soit toujours disponible,
dans lequel l'évolution temporelle de la température de l'accumulateur (4) est prédite pour un intervalle de temps T_x tourné vers l'avenir,
le quatrième critère étant de surveiller si l'évolution prédite dépasse une valeur de seuil supérieure,
le prélèvement de puissance prévu sur la base de l'activité de déplacement, c'est-à-dire l'évolution prévue de la puissance P(t) prélevée dans l'accumulateur (4), étant fourni à un modèle de température qui tient compte de la résistance au transfert de chaleur de l'accumulateur (4) vers l'environnement et de la capacité thermique de l'accumulateur (4),
la résistance de transfert de chaleur dépendant de l'état du ventilateur (3),
avec le ventilateur (3) allumé, la résistance de transfert de chaleur totale, c'est-à-dire effective, à l'air ambiant étant inférieure à celle du ventilateur (3) éteint,
une dissipation de puissance étant déterminée comme le produit de la résistance interne de l'accumulateur (4) et du quotient au carré de la quantité de puissance P (t) et de la tension nominale de l'accumulateur (4) pour déterminer la température prédite selon le modèle de température,
la différence entre la puissance dissipée et un signal étant fournie à un premier organe de régulation dont le signal de sortie représente la température prédite, et à un second organe de régulation dont le signal de sortie est le signal,
dans lequel le premier élément de régulation est un élément d'intégration et le second élément de régulation est un élément proportionnel,
le facteur de proportionnalité du premier élément de régulation étant l'inverse de la capacité thermique de l'accumulateur (4) et le facteur de proportionnalité du second élément de régulation étant l'inverse de la résistance de transfert de chaleur.

2. Procédé selon la revendication 1,
**caractérisé en ce que**
le troisième critère est de savoir si une valeur de l'énergie actuellement présente dans l'accumulateur (4) est inférieure à une valeur de seuil et supérieure ou égale à zéro, la consommation d'énergie W_Prognose de l'unité mobile (2) est prédite à tout moment pour la distance de déplacement prévue jusqu'à la prochaine charge inductive de l'accumulateur (4) de l'unité mobile (2), c'est-à-dire pour le déplacement de consigne, les puissances de consommation de l'entraînement de traction et des autres consommateurs électriques de l'unité mobile (2), qui sont alimentés par l'accumulateur (4), sont prises en compte et la quantité d'énergie (W_ist) actuellement disponible dans l'accumulateur (4) est prise en compte,
une valeur étant déterminée à partir de ces deux grandeurs, à savoir un facteur de valeur K_W,
la dépendance fonctionnelle de la valeur étant telle que
- la valeur présente une valeur différente de zéro à partir d'une première plage de valeurs, si la différence entre la teneur en énergie (W_ist) présente dans l'accumulateur (4) et la consommation d'énergie prédite pour le déplacement de consigne (W_Prognose) correspond à une première valeur d'énergie,
- et qu'elle présente une valeur différente de zéro à partir d'une seconde plage de valeurs, si la différence entre la teneur en énergie (W_ist) présente dans l'accumulateur (4) et la consommation d'énergie prédite pour le mouvement de consigne (W_Prognose) correspond à une seconde valeur énergétique,
- la première valeur d'énergie étant inférieure à la seconde valeur d'énergie,
- les valeurs de la seconde plage de valeurs étant inférieures aux valeurs de la première plage de valeurs,
- la valeur prend des valeurs négatives lorsque la demande d'énergie prédite W_Prognose est supérieure à la teneur en énergie disponible W_,
- la valeur est mise à zéro lors de la charge inductive.

3. Procédé selon au moins l'une quelconque des revendications précédentes,
**caractérisé en ce que**
l'évolution temporelle de la température de l'accumulateur (4) est prédite pour un intervalle de temps T_x orienté vers l'avenir en supposant un ventilateur (3) éteint,
le cinquième critère étant de surveiller si l'évolution prévue n'est pas inférieure à une valeur de seuil inférieure au moment T_x.

4. Dispositif pour la mise en œuvre d'un procédé selon au moins l'une quelconque des revendications précédentes,
**caractérisé en ce que**
l'accumulateur (4) est un accumulateur à charge rapide (4), c'est-à-dire que le quotient de la capacité de charge de l'accumulateur (4) mesurée en ampères-heures et le courant de charge maximal autorisé est inférieur à un dixième d'heure,
le flux d'air pouvant être débité par le ventilateur (3) s'écoulant au moins partiellement le long de canaux de ventilation et/ou d'ailettes de refroidissement de l'accumulateur (4),
un moyen, à savoir un circuit électronique, commandant le ventilateur (3) en fonction de signaux provenant de capteurs pour détecter des valeurs de grandeurs physiques de l'unité mobile (2),
un moyen, à savoir un ordinateur, étant agencé sur l'unité mobile (2) pour prédire le déplacement prédit de l'unité mobile (2) le long de la courbe de la trajectoire de consigne, l'évolution temporelle nécessaire de la puissance et/ou la consommation totale d'énergie nécessaire au déplacement prévu de l'unité mobile (2),
l'unité mobile (2) étant mobile sur une surface de déplacement d'une installation,
l'accumulateur (4) étant un accumulateur hybride, c'est-à-dire un appariement d'un condensateur double couche à base de carbone avec une batterie rechargeable à base d'hydrure métallique de nickel,
l'unité mobile (2) présentant sur sa face inférieure un enroulement secondaire qui peut être couplé par induction à un enroulement primaire (1) agencé sur la surface de déplacement, de sorte que de l'énergie puisse être transférée de l'enroulement primaire (1) à l'enroulement secondaire,
un courant alternatif étant appliqué dans l'enroulement primaire (1) par un circuit électronique,
l'enroulement secondaire étant connecté à une capacité en série ou en parallèle de telle sorte que la fréquence de résonance du circuit oscillant ainsi formé corresponde à la fréquence du courant alternatif appliqué dans l'enroulement primaire (1),
la résistance de transfert de chaleur de l'accumulateur (4) à l'environnement dépendant de l'état du ventilateur (3),
avec le ventilateur (3) allumé, la résistance de transfert de chaleur totale, c'est. à-dire effective, à l'air ambiant étant inférieure à celle du ventilateur (3) éteint.
